# EUROPÄISCHE PATENTSCHRIFT

(11) **EP 2 966 244 B1**
(45) Veröffentlichungstag und Bekanntmachung des Hinweises auf die Patenterteilung: **06.06.2018**
(21) Anmeldenummer: 15175624.4
(22) Anmeldetag: 07.07.2015
(51) Int. Cl.: E05B 15/00, E05B 17/22, E05B 47/00, E05B 81/06, E05B 81/16, E05B 81/64, G01D 5/25, H02K 37/24, H02K 11/00

(54) **ANTRIEBSKOMPONENTE EINES ANTRIEBSSTRANGS EINES KRAFTFAHRZEUGSCHLOSSES**
DRIVE COMPONENT OF A DRIVE TRAIN FOR A MOTOR VEHICLE LOCK
COMPOSANT D'ENTRAINEMENT D'UNE CHAINE CINEMATIQUE D'UNE SERRURE DE VEHICULE AUTOMOBILE

(30) Priorität: 07.07.2014 DE 202014103113 U
(43) Veröffentlichungstag der Anmeldung: 13.01.2016
(73) Patentinhaber: Brose Schliesssysteme GmbH & Co. KG, 42369 Wuppertal (DE)
(72) Erfinder: Reinert, Jörg, 42899 Remscheid (DE)
(74) Vertreter: Gottschald, Jan

(56) Entgegenhaltungen:
- EP-A2- 1 085 546
- CN-A- 102 692 243
- DE-A1-102007 028 957
- US-B1- 6 194 673

## Beschreibung

Die Erfindung betrifft eine Antriebskomponente eines Antriebsstrangs eines Kraftfahrzeugschlosses gemäß Anspruch 1 und ein Kraftfahrzeugschloss gemäß Anspruch 15.

Die in Rede stehende Antriebskomponente ist dem Antriebsstrang eines Kraftfahrzeugschlosses zugeordnet, das bei allen Arten von Verschlusselementen eines Kraftfahrzeugs Anwendung findet Zu diesen Verschlusselementen gehören insbesondere Kraftfahrzeugtüren. Der Begriff "Kraftfahrzeugtür" ist vorliegend weit zu verstehen. Er umfasst insbesondere Seitentüren, Hecktüren, Heckklappen, Heckdeckel oder Motorhauben. Eine Kraftfahrzeugtür in diesem Sinne kann grundsätzlich auch nach Art einer Schiebetür ausgestaltet sein.

Die Ausstattung heutiger Kraftfahrzeugschlösser mit motorischen Funktionen, beispielsweise einer motorischen Zentralverriegelungsfunktion, führt zu einer Komfortsteigerung für den Benutzer. Hierfür ist das Kraftfahrzeugschloss mit einem Antriebsstrang oder mehreren Antriebssträngen ausgestattet. Der Antriebsstrang in diesem Sinne umfasst die gesamte Antriebskette, einschließlich eines Antriebs, der dem Antrieb nachgeschalteten Getriebe- und Übertragungselemente sowie der anzutreibenden Komponente selbst. Neben einer hohen Kosteneffizienz stellt eine hohe Manipulationssicherheit eine besondere Herausforderung dar.

In der EP 1 085 546 A2, der US 6,194,673 B1 sowie der CN 102692243 A sind inkrementelle Sensoranordnungen zum Messen von Relativbewegungen beschrieben. In der DE 10 2007 028 957 A1 ist eine Antriebskomponente beschrieben, bei der ein Stellglied gegen einen Anschlug "auf Block" gefahren wird und dieser Zustand über einen oder mehrere Lagesensoren abgefragt wird.

Bei der bekannten Antriebskomponente (DE 10 2008 012 563 A2), von der die Erfindung ausgeht, handelt es sich um einen Zentralverriegelungsantrieb eines Kraftfahrzeugschlosses. Der als Direktantrieb ausgestaltete Antrieb weist einen um eine Rotorachse rotierbaren Rotor und einen Ständer mit einer Spulenanordnung aus mehreren Antriebsspulen auf. Durch eine entsprechende Ansteuerung der Spulenanordnung lassen sich unterschiedliche magnetisch stabile Antriebsstellungen des Rotors einstellen. Dabei entsprechen die unterschiedlichen Antriebsstellungen des Rotors entsprechend unterschiedlichen Funktionszuständen des Kraftfahrzeugschlosses. Hierbei kann es sich beispielsweise um die Funktionszustände "Verriegelt" oder "Entriegelt" handeln.

Dieses Wirkprinzip weist insoweit Optimierungspotenzial auf, als dass das erfolgreiche Einstellen einer Antriebsstellung keine ohne Weiteres messbare Rückmeldung aus der Sicht der Ansteuerung der Spulenanordnung umfasst, mit der unmittelbar überprüft werden könnte, ob die Antriebsstellung tatsächlich erreicht wurde. Um zu gewährleisten, ob die entsprechende Antriebsstellung tatsächlich von dem Rotor eingenommen wurde, wird regelmäßig z. B. über einen Mikroschalter eine Position der von der Antriebskomponente angetriebenen Komponente, z. B. eines entsprechenden Funktionselementes zur Ent- und Verriegelung des Kraftfahrzeugschlosses, ermittelt. Dieser Ansatz ist aber wenig kostengünstig und kann insbesondere dann problematisch sein, wenn die Positionsänderung z. B. des Funktionselements ggf. auch aus einem anderen Grund als durch die Einstellung der Antriebsstellung des Rotors erfolgen kann.

Hinzu kommt, dass bei der bekannten Antriebskomponente ohne jedwedes Bestromen der Spulen der Rotor im Prinzip bezüglich einer Rotation schwimmend ist. Daher wird in der Regel weiter abtriebsseitig in der Antriebskette eine Vorrichtung vorgesehen, um die entsprechende Funktionsstellung stabil zu halten und eine Auslenkung von der gewünschten Stellung zu verhindern.

Der Erfindung liegt das Problem zugrunde, den bekannten Antrieb derart auszugestalten und weiterzubilden, dass die Möglichkeit, eine von dem Antrieb eingenommene Position zu erfassen und diese beizubehalten, verbessert wird. Das obige Problem wird bei der in Rede stehenden Antriebskomponente durch die Merkmale des Anspruchs 1 gelöst.

Die vorschlagsgemäße Antriebskomponente ist einem Antriebsstrang eines Kraftfahrzeugschlosses zugeordnet und mit einem um eine Antriebsachse rotierbaren Antriebsteil ausgestattet. Die Antriebskomponente weist ebenso eine Halteanordnung zum Stabilisieren des Antriebsteils in mindestens einer Stabilisierungsstellung auf. Ferner weist die Antriebskomponente eine Sensoranordnung zum Bestimmen einer Ist-Stellung des Antriebsteils durch Erfassen des Antriebsteils auf.

Von besonderer Bedeutung für die vorschlagsgemäße Lehre ist die Tatsache, dass die Sensoranordnung die Ist-Stellung des Antriebsteils durch ein Erfassen des Antriebsteils selbst bestimmt. Es wird also nicht mittelbar, z. B. basierend auf einem nachgelagerten Teil des Antriebsstrangs wie dem obigen Funktionselement, die Position des Antriebsteils gefolgert, sondern es findet eine Erfassung des Antriebsteils selbst statt.

Mit der vorschlagsgemäßen Antriebskomponente kann sichergestellt werden, dass einerseits das Antriebsteil eine gewünschte Position eingenommen hat und andererseits das Antriebsteil die eingenommene Position auch zuverlässig beibehält. Dies erhöht die Betriebssicherheit der Antriebskomponente und ermöglicht einen kostengünstigeren Aufbau des Antriebsstrangs und der dazugehörigen Komponenten insgesamt.

Bei der bevorzugten Ausgestaltung ist die Halteanordnung ein Bestandteil der Sensoranordnung, was die Kompaktheit steigert und eine kostengünstige Realisierung erlaubt.

Bei der besonders bevorzugten Ausgestaltung gemäß Anspruch 3 handelt es sich bei der vorschlagsgemäßen Antriebskomponente um einen elektrischen Antrieb mit Rotor und Ständer. Die Integration der vorschlagsgemäßen Lösung in einem solchen Antrieb führt zu einer universellen Anwendbarkeit, sofern der Antrieb für unterschiedliche Anwendungen Einsatz findet.

Die vorschlagsgemäße Lösung ist für einen Antrieb gemäß Anspruch 4 von ganz besonderer Bedeutung. Hier lassen sich mindestens zwei magnetisch stabile, rotatorische Antriebsstellungen des Rotors erzeugen, indem eine entsprechende Ansteuerung des Antriebs vorgenommen wird. Es handelt sich bei dieser Variante also nicht um einen endlos drehenden Antrieb.

Eine besonders bevorzugte Ausgestaltung sieht eine magnetische oder elektrische Erfassung des Antriebsteils dadurch vor, dass ein entsprechender - magnetischer oder elektrischer - Erfassungskreis geschlossen wird, welcher durch das Antriebsteil selbst führt. Dies stellt einen Ansatz zur unmittelbaren Erfassung der Lage des Antriebsteils dar, welcher mit einem Minimum an zusätzlichen Komponenten auskommt.

Die bevorzugte Ausgestaltung des Anspruchs 5 sieht speziell die Kontaktierung des Antriebsteils durch eine Haltefläche in der Stabilisierungsstellung vor, durch welche Haltefläche der obige Erfassungskreis dann ebenfalls führt. Der Unteranspruch 7 betrifft speziell die Ausgestaltung der Haltefläche als Kontaktpol für einen solchen Erfassungskreis. Auf diese Weise kann die Haltefläche die Funktionen des Haltens des Antriebsteils und des Erfassens der Ist-Position des Antriebsteils vereinen. Die Halteanordnung ist hier in konstruktiver einfacher Weise ein Bestandteil der Sensoranordnung.

Das Vorsehen eines radial abstehenden Kontaktarms gemäß der Ausgestaltung des Anspruchs 7 erleichtert sowohl das Vorsehen der Stabilisierung durch die Halteanordnung als auch das Erfassen der Ist-Stellung durch die Sensoranordnung.

Eine Vereinigung dieser Erfassung und der Stabilisierung lässt sich in ganz besonders kompakter Weise durch einen ringartigen Schleifkontakt erreichen, wie in den Ausgestaltungen der Anspruchs 8 beschrieben ist.

Die obige Stabilisierung kann bevorzugt durch ein mechanisches Rasten des Antriebsteils in einer entsprechenden Rastvorrichtung erreicht werden, was Gegenstand des bevorzugten Anspruchs 9 ist.

Speziell in Kombination mit der Ausführung der Haltevorrichtung als ringartiger Schleifkontakt kann eine solche Rastvorrichtung - wie von Anspruch 10 vorgeschlagen durch Seitenerhebungen gebildet werden, welche die entsprechende Stabilisierungsstellung in Umlaufrichtung seitlich begrenzen.

Wie von Anspruch 11 festgestellt, können dabei die Flankensteilheiten der Seitenerhebungen in den verschiedenen Richtungen insoweit unterschiedlich ausgestaltet werden, dass ein Überführen in die Stabilisierungsstellung mit geringerem Widerstand möglich ist als ein Überführen aus der Stabilisierungsstellung.

Diese bevorzugten Ausgestaltungen können insbesondere dadurch kompakt verwirklicht werden, indem sie zumindest teilweise durch das Antriebsgehäuse der Antriebskomponente gebildet werden.

Die vorschlagsgemäße Lösung sieht eine Bestimmung der Ist-Stellung durch eine variable Verschaltung einer Schaltplanordnung vor, wobei die einzelnen Schaltpole vorzugsweise durch Stanzbiegeleiter bereitgestellt werden.

Zum Herstellen dieser verschiedenen Verschaltungszustände ist gemäß Unteranspruch 14 eine Verschaltungsvorrichtung vorgesehen, welche Bestandteil des Antriebsteils ist oder sich mit dem Antriebsteil mitdreht. Dieses Verschalten kann dadurch erfolgen, dass die Verschaltungsvorrichtung lediglich der Verbindung von Schaltpolen untereinander dient.

Eine Doppelfunktion zum Verschalten der Schaltpolanordnung und zum Stabilisieren des Antriebsteils kann dadurch erreicht werden, dass die Verschaltungsvorrichtung auch entsprechende Halteelemente aufweist.

Nach einer weiteren Lehre gemäß Anspruch 15, der eigenständige Bedeutung zukommt, wird ein Kraftfahrzeugschloss mit einem Stellelement und einer Antriebskomponente eines Antriebsstranges zur Verstellung des Stellelements beansprucht. Auf alle Ausführungen zu der vorschlagsgemäßen Antriebskomponente darf insoweit verwiesen werden.

Vorzugsweise dient der Antriebsstrang des vorschlagsgemäßen Kraftfahrzeugschlosses der Einstellung unterschiedlicher Funktionszustände einer Schlossmechanik des Kraftfahrzeugschlosses.

Im Folgenden wird die Erfindung anhand einer lediglich ein Ausführungsbeispiel darstellenden Zeichnung näher erläutert. In der Zeichnung zeigt:
- Fig. 1: die für die Erfindung wesentlichen Bestandteile eines vorschlagsgemäßen Kraftfahrzeugschlosses gemäß einem ersten Ausführungsbeispiel,
- Fig. 2: eine perspektivische Ansicht der vorschlagsgemäßen Antriebskomponente des Kraftfahrzeugschlosses der Fig. 1,
- Fig. 3: eine Sicht auf die Halteanordnung der Antriebskomponente der Fig. 2 senkrecht zur Antriebsteilachse,
- Fig. 4: die für die Erfindung wesentlichen Bestandteile eines vorschlagsgemäßen Kraftfahrzeugschlosses gemäß einem weiteren Ausführungsbeispiel,
- Fig. 5: eine perspektivische Ansicht der vorschlagsgemäßen Antriebskomponente des Kraftfahrzeugschlosses der Fig. 4,
- Fig. 6: eine Explosionsansicht der vorschlagsgemäßen Antriebskomponente der Fig. 5 und
- Fig. 7a-c: eine jeweilige Ansicht der Antriebskomponente der Fig. 6 in drei verschiedenen Stabilisierungsstellungen.

Es darf vorab darauf hingewiesen werden, dass in der Zeichnung nur die Komponenten der vorschlagsgemäßen Anordnung dargestellt sind, die für die Erläuterung der Lehre notwendig sind. Entsprechend ist eine Schlossfalle, die in üblicher Weise mit einem Schließbolzen o. dgl. zusammenwirkt und die mittels einer Sperrklinke in einer Hauptschließstellung und in einer ggf. vorhandenen Vorschließstellung gehalten wird, in der Zeichnung nicht dargestellt.

Der Begriff "Kraftfahrzeugschloss" ist hier weit zu verstehen. Er umfasst nicht nur eine zentrale Anordnung zur Aufnahme von Schließelementen wie Schlossfalle und Sperrklinke, sondern auch eine verteilte Anordnung mit mehreren verteilten Funktionseinheiten, die beispielsweise über flexible Kraftübertragungsmittel antriebstechnisch miteinander gekoppelt sind.

Bei der vorschlagsgemäßen Antriebskomponente 1 eines Antriebsstrangs 2 eines Kraftfahrzeugschlosses 3 handelt es sich hier und vorzugsweise um einen elektrischen Antrieb, wie noch erläutert wird. Alle Ausführungen zu dem in der Zeichnung dargestellten Antrieb gelten für alle übrigen, denkbaren Arten von Antriebskomponenten entsprechend.

Die Antriebskomponente 1 ist mit einem um eine Antriebsteilachse 4 rotierbaren Antriebsteil 5 ausgestattet. Ferner weist die Antriebskomponente 1 eine Halteanordnung 6 zum Stabilisieren des Antriebsteils 5 in mindestens einer Stabilisierungsstellung auf. Stabilisieren bedeutet hier und nachfolgend, dass eine Auslenkung des Antriebsteils 5 aus dieser Stabilisierungsstellung heraus zunächst eine gewisse Stabilisierungskraft, welche rückstellend wirkt, gegen eine solche Auslenkung überwinden muss. Solange die auf das Antriebsteil 5 wirkende Kraft diese Stabilisierungskraft nicht überwindet, verbleibt das Antriebsteil 5 in der Stabilisierungsstellung bzw. wird wieder zurück in die Stabilisierungsstellung gelenkt. Dies gilt für beide möglichen Auslenkungsrichtungen gemäß einer Rotation des Antriebsteils 5.

Gemäß einer bevorzugten Ausführungsform ist zumindest ein Teil der Halteanordnung 6 ein Bestandteil der Sensoranordnung 7. Auf diese Weise kann eine besonders elegante Doppelfunktion ein und derselben Anordnung zum Stabilisieren und zum Bestimmen der Ist-Stellung verwirklicht werden.

Die vorschlagsgemäße Antriebskomponente 1 weist ferner eine Sensoranordnung 7 zum Bestimmen einer Ist-Stellung des Antriebsteils 5 durch Erfassen des Antriebsteils 5 auf. Wie bereits eingangs beschrieben wird nicht mittelbar, also etwa durch eine andere Komponente des Kraftfahrzeugschlosses, auf eine Ist-Stellung des Antriebsteils 5 geschlossen, sondern es wird vielmehr das Antriebsteil 5 selbst zu diesem Zweck erfasst. Hier ist nicht erforderlich, dass die Sensoranordnung 7 jede mögliche Ist-Stellung des Antriebsteils 5 erfassen kann. Vielmehr kann es sein, dass nur bestimmte Ist-Stellungen oder sogar nur eine einzige Ist-Stellung des Antriebsteils 5 durch die Sensoranordnung 7 bestimmt werden können. Entsprechende bevorzugte Ausgestaltungen werden untenstehend noch genauer beschrieben.

Hier und vorzugsweise handelt es sich bei der vorschlagsgemäßen Antriebskomponente 1 um einen elektrischen Antrieb 8, der einen Rotor 9 und einen Ständer 10 aufweist, wobei es sich bei dem Rotor 9 hier und vorzugsweise um das Antriebsteil 5 der Antriebskomponente 1 handelt. Vorzugsweise weist der Ständer 10 eine - hier nicht gezeigte - Spulenanordnung aus mindestens einer Antriebsspule und der Rotor 9 eine - ebenfalls hier nicht gezeigte - Rotor-Permanentmagnetanordnung mit den Magnetpolen auf, wobei die Spulenanordnung in üblicher Weise mit der Rotor-Permanentmagnetanordnung zur Erzeugung von Antriebsmomenten zusammenwirkt. Die Dipolachse der Rotor-Permanentmagnetanordnung, die hier und vorzugsweise auf einen einzigen Permanentmagneten zurückgeht, ist vorzugsweise senkrecht zu der Antriebsteilachse 4, hier also der Rotorachse, ausgerichtet. Diese Bauform des Antriebs 8 ist kostengünstig und wenig verschleißanfällig, da auf eine Kommutierung einer elektrischen Antriebsspannung verzichtet werden kann. Es sind aber auch andere Bauformen für den Antrieb 8 denkbar, insbesondere solche Bauformen, bei denen der Ständer 10 eine Permanentmagnetanordnung und der Rotor 9 eine Spulenanordnung aufweist oder bei denen der Ständer 10 und der Rotor 9 jeweils eine Spulenanordnung aufweisen.

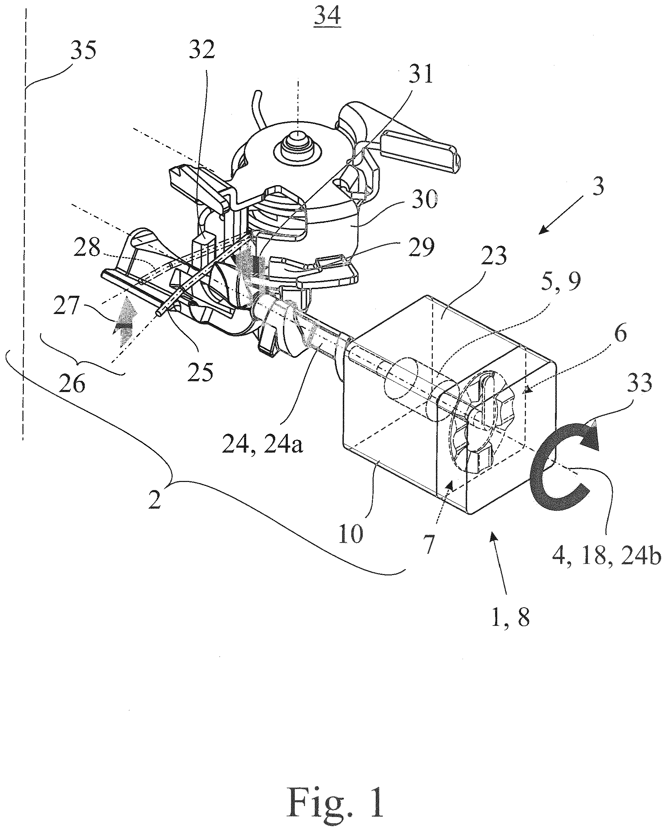

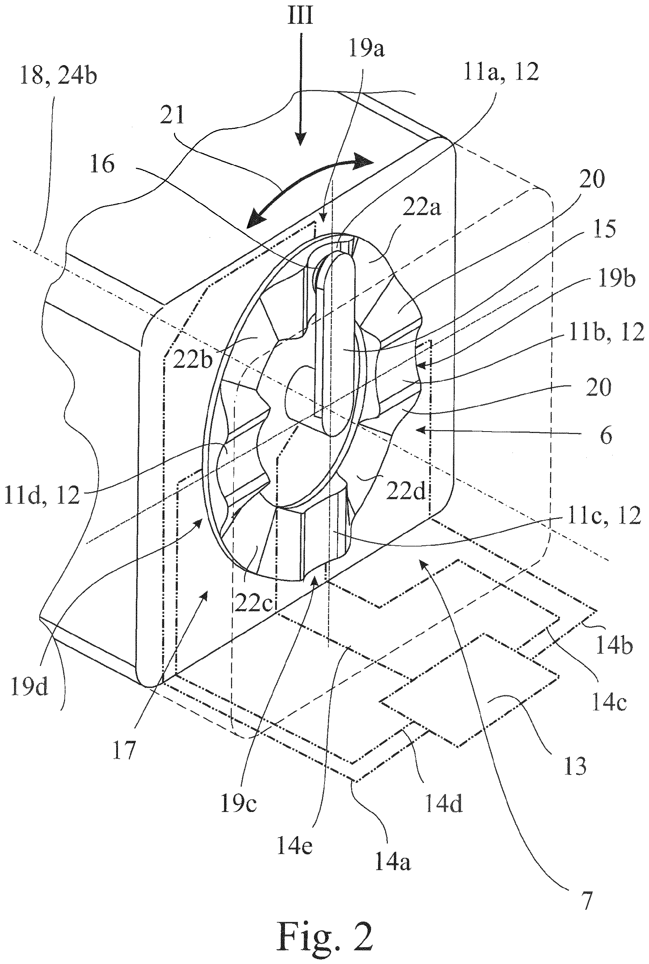

Es ist weiter bevorzugt, dass - wie auch in den Fig. 1 und 2 dargestellt - die Halteanordnung 6 antriebsseitig zum Ständer 10 angeordnet ist. Dies bedeutet, dass entlang der Antriebsteilachse 4 eine antriebsseitige Richtung - in der Darstellung der Fig. 1 also nach rechts weisend, da der Antrieb 8 relativ zum abtriebsseitigen Antriebsstrang 2 rechts angeordnet ist - und eine abtriebsseitige Richtung - in der Darstellung der Fig. 1 also nach links weisend - definiert werden kann und dass dann die Halteanordnung 6 antriebsseitig zum Ständer 10 angeordnet ist. Dies hat den Vorteil, dass für die Halteanordnung 6 kein ggf. knapper Raum zwischen dem Antrieb 8 und dem abtriebseitigen Antriebsstrang 2 im Übrigen erforderlich ist.

Vorzugsweise ist der Antrieb 8 so ausgestaltet, dass durch unterschiedliche Ansteuerung des Antriebs 8, hier und vorzugsweise durch unterschiedliche stationäre Bestromung der Spulenanordnung, mindestens zwei magnetisch stabile, rotatorische Antriebsstellungen des Rotors 9 erzeugbar sind. Die Formulierung "magnetisch stabil" bedeutet hier, dass die Bestromung der Spulenanordnung mit dem resultierenden Magnetfeld dafür sorgt, dass der Rotor 9 bei einer Auslenkung aus der jeweiligen Antriebsstellung heraus stets zurück in diese Antriebsstellung getrieben wird, und zwar unabhängig von der Richtung der Auslenkung. Der Begriff "stationäre Bestromung" bedeutet hier, dass sich die eingestellte Bestromung im Zeitbereich nicht ändert. Der Begriff "Bestromung" ist dabei allgemein zu verstehen und umfasst sowohl das Anlegen einer elektrischen Spannung als auch das Einprägen eines elektrischen Stroms in die Spulenanordnung. Dabei kann die Spannung bzw. der Strom auch gepulst o. dgl. sein. Im einfachsten Fall wird für eine stationäre Bestromung im obigen Sinne eine konstante Spannung auf den betreffenden Teil der Spulenanordnung aufgeschaltet. Der Antrieb 8 kann dabei grundsätzlich sowohl nach Art einer Axialflussmaschine als auch nach Art einer Radialflussmaschine ausgebildet sein.

Hier ist bevorzugt vorgesehen, dass die obige, mindestens eine Stabilisierungsstellung einer Antriebsstellung entspricht. Somit stabilisiert die Halteanordnung 6 das Antriebsteil 5 speziell in der jeweiligen Antriebsstellung, nachdem das Antriebsteil 5 durch eine Ansteuerung des Antriebs 8 in diese Antriebsstellung gebracht wurde. Daneben können auch Antriebsstellungen vorgesehen sein, in denen das Antriebsteil 5 nicht stabilisiert wird, also auch nicht durch die Halteanordnung 6 stabilisiert wird.

Wieder auf die obige Erfassung des Antriebsteils 5 zurückkommend, ist für eine solche Erfassung bevorzugt vorgesehen, dass zum Erfassen des Antriebsteils 5 ein elektrischer und/oder magnetischer Erfassungskreis durch das Antriebsteil 5 führt. Dabei kann es sich also einerseits um den geschlossenen Erfassungskreis eines magnetischen Flusses oder um den geschlossenen Erfassungskreis eines elektrischen Stroms handeln. Gemäß einer ersten diesbezüglichen Variante - welche hier nicht dargestellt ist - kann die Sensoranordnung 7 Hallsensoren oder duale Hallsensoren und Hall-Winkelsensoren umfassen. Gemäß dieser Variante kann dann das Antriebsteil 5 entsprechend platzierte Permanentmagneten aufweisen, deren Feld von den Hallsensoren erfasst wird. Der magnetische Fluss der Permanentmagneten dient dann der Erfassung des Antriebsteils 5 und fließt ebenso durch das Antriebsteil 5 selbst, nämlich jedenfalls durch die Permanentmagneten des Antriebsteils 5. Gemäß einer nicht dargestellten Variante können hier diese Permanentmagneten des Antriebsteils 5, beispielsweise durch um das Antriebsteil 5 angeordnete Elektromagneten, auch zum Stabilisieren des Antriebsteils 5 in der mindestens einen Stabilisierungsstellung verwendet werden. Hiermit wären solche Permanentmagneten sowohl Bestandteil der Halteanordnung 6 als auch der Sensoranordnung 7.

Gemäß einer zweiten, in der Zeichnung dargestellten Variante, fließt zum Erfassen des Antriebsteils ein elektrischer Strom durch das Antriebsteil 5. Gemäß den obigen Ausführungen zur Erfassung kann es sein, dass dieser elektrische Strom zum Erfassen des Antriebsteils 5 nur für bestimmte Stellungen des Antriebsteils 5 fließt und zwar insbesondere für diejenigen Stellungen des Antriebsteils 5, in welchen die Sensoranordnung 7 die Ist-Stellung bestimmt.

In besonders bevorzugter Ausgestaltung weist die Halteanordnung 6 zu jeder Stabilisierungsstellung eine Haltefläche 11a-d auf, welche in der jeweiligen Stabilisierungsstellung mit dem Antriebsteil 5 in Kontakt ist. Speziell kann der Erfassungskreis durch die Haltefläche 11a-d führen. Auf diese Weise erfüllt die Haltefläche 11a-d eine Doppelfunktion, nämlich einerseits als Teil der Halteanordnung 6 und andererseits zur Erfassung des Antriebsteils 5 durch die Sensoranordnung 7. Speziell wenn es sich um einen elektrischen Erfassungskreis - wie oben beschrieben - handelt, kann also die Haltefläche 11a-d dazu dienen, den elektrischen Strom zur Erfassung des Antriebsteils 5 zu führen.

Entsprechend ist es bevorzugt, dass ein der Ist-Stellung zugeordneter Kontaktpol 12 der Sensoranordnung 7 durch eine jeweilige Haltefläche 11a-d gebildet wird. Es kann dadurch erreicht werden, dass das Antriebsteil 5 in einer jeweiligen Stabilisierungsstellung in elektrischer Verbindung mit der jeweiligen Haltefläche 11a-d steht, sodass dann die Sensoranordnung 7 die der Haltefläche 11a-d zugeordnete Stabilisierungsstellung als Ist-Stellung erfasst. Diese Ausgestaltung geht anschaulich aus der Fig. 2 hervor. Die Sensoranordnung 7, welche hier eine Auswerteeinheit 13 und Signalleitungen 14a-e umfasst, kann das Vorliegen einer elektrischen Verbindung zwischen der Signalleitung 14e - welche ihrerseits mit dem Antriebsteil 5 verbunden ist - und jeweils mit einer der Signalleitungen 14a-d erfassen, wobei jede der Signalleitungen 14a-d einer Haltefläche 11a-d und damit einer Stabilisierungsstellung zugeordnet ist. Eine solche elektrische Verbindung kann etwa durch einen Stromfluss durch die jeweilige Signalleitung angezeigt werden. Es kann auch sein, dass die einzelnen Ist-Stellungen durch einen jeweils unterschiedlichen Widerstandswert zwischen dem Kontaktpol 12 und einer entsprechenden Signalleitung wie hier etwa der Signalleitung 14e codiert sind. In so einem Fall reicht die Messung durch die Auswerteeinheit 13 an einem einzelnen Signalleitungspaar. Wie oben beschrieben entsprechen diese Stabilisierungsstellungen bevorzugt auch den ansteuerbaren Antriebsstellungen des Antriebs 8. Es kann aber auch sein, dass die Sensoranordnung 7 eine Ist-Stellung des Antriebsteils 5 in z. B. einer Antriebsstellung bestimmen kann, welche - wie oben bereits erwähnt - keine Stabilisierungsstellung ist.

Wie ebenfalls in der Fig. 2 dargestellt ist es bevorzugt, dass das Antriebsteil 5 einen radial zur Antriebsteilachse 4 ausgerichteten Kontaktarm 15 aufweist. Dies ermöglicht die bevorzugte Ausgestaltung, nach welcher die Halteanordnung 6 zum Stabilisieren des Antriebsteils 5 auf den Kontaktarm 15 und insbesondere auf einen radialen Außenbereich des Kontaktarms 15 wirkt. Auf diese Weise wirkt die radiale Erstreckung des Kontaktarms 15 als Hebel zur Stabilisierung des Antriebsteils 5 gegenüber einer Rotation. Alternativ oder zusätzlich zu dieser mechanischen Wirkung kann vorgesehen sein, dass der Erfassungskreis durch den Kontaktarm 15 führt. Damit kommt dem Kontaktarm 15 auch eine elektrische oder magnetische Funktion bei der Bestimmung der Ist-Stellung des Antriebsteils 5 zu. Speziell kann eine Polfläche 16 des Kontaktarms 15 an seinem radialen Außenbereich angeordnet sein und der obige Erfassungskreis durch diese Polfläche 16 führen.

Um einerseits eine wirksame elektrische Verbindung zu der jeweiligen Haltefläche 11a-d zu gewährleisten und andererseits ein Überwinden der Stabilisierung durch die Halteanordnung 6 - speziell zum Verlassen der Stabilisierungsstellung - zu ermöglichen, ist bevorzugt vorgesehen, dass der Kontaktarm 15 und/oder eine Gegenkontaktstruktur - z. B. die Haltefläche 11a-d - der Halteanordnung 6 federelastisch ausgestaltet ist. Hier kann speziell der Kontaktarm 15 auch gegen die jeweilige Haltefläche 11a-d vorgespannt sein.

Wie in der Zeichnung dargestellt ist es bevorzugt, dass die Halteanordnung 6 einen ringartigen Schleifkontakt 17 um eine Ringachse 18 umfasst. Die gedachte Ringachse 18 bildet also die Mittelachse des ringartigen Schleifkontakts 17. Diese Ringachse 18 verläuft bevorzugt im Wesentlichen parallel zu der Antriebsteilsachse 4. Die Ringachse 18 kann auch - wie in der Fig. 1 dargestellt - identisch zu der Antriebsteilachse 4 sein. Gemäß dieser Ausführung ist die Halteanordnung 6 und speziell der Schleifkontakt 17 also umlaufend zum Antriebsteil 5 angeordnet.

Ein besonders einfacher Aufbau ergibt sich, wenn - wie in der Zeichnung dargestellt - der Schleifkontakt 17 eine Umlauffläche 17a aufweist, welche im Wesentlichen senkrecht zur Antriebsteilachse 4 angeordnet ist. In so einem Fall ist es weiter vorteilhaft, dass die Halteflächen 11a-d auf der Umlauffläche 17a angeordnet sind.

Prinzipiell kommen verschiedene Möglichkeiten in Betracht, mit denen die Halteanordnung 6 das Antriebsteil 5 in der mindestens einen Stabilisierungsstellung stabilisieren kann. Bevorzugt ist, dass die Halteanordnung 6 zu jeder Stabilisierungsstellung eine Rastvorrichtung 19a-d aufweist, sodass das Antriebsteil 5 in jeder Stabilisierungsstellung mechanisch einrastet. Dabei können die Halteflächen 11a-d von einer jeweiligen Rastvorrichtung 19a-d umfasst sein, was auch in der Fig. 2 erkennbar dargestellt ist.

Eine bevorzugte Ausgestaltung dieser Rastvorrichtungen 19a-d sieht nun vor, dass die Rastvorrichtungen 19a-d jeweils Seitenerhebungen 20 aufweisen, welche die jeweilige Stabilisierungsstellung begrenzen, und zwar insbesondere in Umlaufrichtung 21 des Schleifkontakts 17 begrenzen. Der Kontaktarm 15 rastet also entlang eines Umfangs des Schleifkontakts 17 zwischen den, die jeweilige Stabilisierungsstellung begrenzenden Seitenerhebungen 20 ein. Die Seitenerhebungen 20 stehen nun speziell dadurch einer Auslenkung des Antriebsteils 5 bzw. des Kontaktarms 15 aus der Stabilisierungsstellung entgegen, dass die Seitenerhebungen 19a-d jeweils eine Rückstellkraft gegen ein Auslenken aus der Stabilisierungsstellung auf das Antriebsteil 5 ausüben. In der bevorzugten Ausgestaltung der Zeichnung wird diese Rückstellkraft auf den Kontaktarm 15 ausgeübt. Hier kann die Stabilisierungsstellung auch eine gewisse Ausdehnung in der Umlaufrichtung 21 aufweisen, sodass ein gewisses Spiel des Antriebsteils 5 möglich ist, ohne dass die beschriebene Rückstellkraft gegen eine Auslenkung durch die Seitenerhebungen 20 zum Tragen kommt.

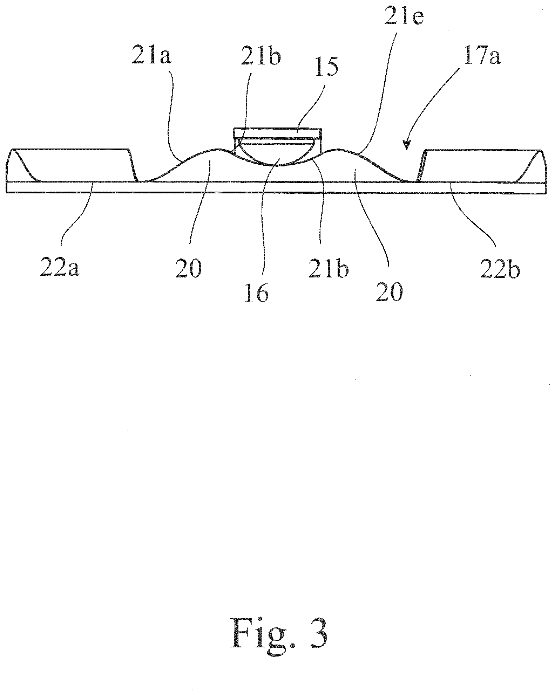

Diese Seitenerhebungen 20 werden prinzipiell durch das Antriebsteil 5 auch beim Einnehmen einer Stabilisierungsstellung überwunden. Um diesen Effekt abweichend von der obigen Stabilisierung zu gestalten, ist bevorzugt vorgesehen, dass die Seitenerhebungen 20 jeweils unterschiedliche Flankensteilheiten aufweisen. Die Flankensteilheiten der Seitenerhebungen 20 sind in der Ansicht der Fig. 3 erkennbar. In diesem Zusammenhang kann es speziell sein, dass die Flankensteilheit einer jeweiligen Außenflanke 21a der Seitenerhebungen 20 geringer ist als die Flankensteilheit einer jeweiligen Innenflanke 21b der Seitenerhebungen 20.

Regelmäßig werden zwischen den Stabilisierungsstellungen des Antriebsteils 5 auch Rotationsbereiche des Antriebsteils 5 vorhanden sein, die das Antriebsteil 5 bestimmungsgemäß nur zum Übergang von einer Stabilisierungsstellung zur anderen quert. Damit die Halteanordnung 6 diesen Vorgang nicht stört ist bevorzugt vorgesehen, dass die Halteanordnung 6 und vorzugsweise der Schleifkontakt 17 zwischen benachbarten Rastvorrichtungen 19a-d einen jeweiligen Freilaufbereich 22a-d aufweist, in welchem das Antriebsteil 5 sich kontaktfrei rotierend bewegen kann. Dieses kontaktfreie Rotieren kann insbesondere dadurch erreicht werden, dass die Umlauffläche 17a des Schleifkontakts 17 in den Freilaufbereichen 22a-d gegenüber den Halteflächen 11a-d zurückversetzt ist. Wenn sich dann das Antriebsteil 5 kontaktfrei bewegt und das Erfassen des Antriebsteils 5 durch die Sensoranordnung 7 auf einer elektrischen Verbindung beruht, kann es sein, dass das Antriebsteil 5 sich von der Sensoranordnung 7 unerfasst durch den jeweiligen Freilaufbereich 22a-d bewegt.

Es kann aber auch gewünscht sein, die Ist-Stellung des Antriebsteils 5 für alle Stellungen des Antriebsteils 5 oder jedenfalls auch in einer Umgebung der Halteflächen 11 a-d zu bestimmen. Dies kann beispielsweise dadurch erfolgen, dass die Polfläche 16 auch zwischen den Halteflächen 11a-d mit dem Schleifkontakt 17 in Verbindung steht und nach Art eines Potentiometers über den aktuellen Drehwinkel die Ist-Stellung des Antriebsteils 5 ermittelt werden kann oder zumindest diejenige Stabilisierungsstellung, zu welcher das Antriebsteil 5 sich aktuell nächstgelegen befindet.

Wie in den Fig. 1 und 2 erkennbar erfordert die vorschlagsgemäße Antriebskomponenten und speziell die Halteanordnung 6 nur sehr geringen zusätzlichen Raum. Ihre Konstruktion kann noch weiter vereinfacht und die Raumanforderungen weiter verringert werden, wenn gemäß einer bevorzugten Ausgestaltung die Antriebskomponente 1 ein Antriebsgehäuse 23 umfasst und dass die Halteanordnung 6 und/oder die Sensoranordnung 7 zumindest teilweise durch das Antriebsgehäuse 23 gebildet wird. Im Ausführungsbeispiel der Zeichnung ist zu erkennen, dass hier der Schleifkontakt 17 Bestandteil des Antriebsgehäuses 23 ist.

Nach einer weiteren Lehre, der ebenfalls eigenständige Bedeutung zukommt, wird ein Kraftfahrzeugschloss 3 mit einem Stellelement 24, insbesondere einer Steuerwelle 24a, und einer oben beschriebenen, vorschlagsgemäßen Antriebskomponente 1 eines Antriebsstranges 2 zur Verstellung des Stellelements 24 beansprucht. Auf alle Ausführungen zu der vorschlagsgemäßen Antriebskomponente 1 darf verwiesen werden.

Das Kraftfahrzeugschloss ist, wie in Fig. 1 dargestellt, mit einer Schlossmechanik ausgestattet, die in unterschiedliche Funktionszustände bringbar ist. Das als Steuerwelle 24a ausgestaltete Stellelement 24 dient hier zur Einstellung der verschiedenen Funktionszustände. Hierfür ist der Antrieb 8 als Direktantrieb ausgestattet. Dadurch kann zwischen dem Antrieb 8 und dem Stellelement 24 auf eine Getriebeübersetzung verzichtet werden. Die Verstellung des Stellelements 24 mittels eines solchen Direktantriebs ist insoweit besonders vorteilhaft, als die unterschiedlichen Funktionszustände weitgehend beliebig und insbesondere aus weitgehend beliebigen Funktionszuständen heraus angefahren werden können.

Bei den obigen Funktionszuständen handelt es sich um Funktionszustände wie "verriegelt", "Entriegelt", "Diebstahlgesichert", "Verriegelt-Kindergesichert" und "Entriegelt-Kindergesichert". Diese Funktionszustände des Kraftfahrzeugschlosses 3 betreffen die Möglichkeit des Öffnens einer Kraftfahrzeugtür o. dgl. mittels eines Türinnengriffs und mittels eines Türaußengriffs. Im Funktionszustand "Verriegelt" kann von innen geöffnet werden, nicht jedoch von außen. Im Funktionszustand "Entriegelt" kann sowohl von innen als auch von außen geöffnet werden. Im Funktionszustand "Diebstahlgesichert" kann weder von innen noch von außen geöffnet werden. Im Funktionszustand "Verriegelt-Kindergesichert" kann von innen entriegelt, aber weder von innen noch von außen geöffnet werden. Im Funktionszustand "Entriegelt-Kindergesichert" kann von außen, nicht jedoch von innen geöffnet werden.

Grundsätzlich können die obigen Funktionszustände einzeln oder in Gruppen realisiert sein. Beispielsweise können ausschließlich die Funktionszustände "Verriegelt" und "Entriegelt" realisiert sein. Denkbar ist weiter die Realisierung mindestens eines zusätzlichen Funktionszustands, beispielsweise des Funktionszustands "Diebstahlgesichert", eines Funktionszustands "Kindergesichert" oder der Funktionszustände "Verriegelt-Kindergesichert" und "Entriegelt-Kindergesichert".

Zur Einstellung der verschiedenen Funktionszustände ist hier und vorzugsweise ein verstellbares Funktionselement 25 vorgesehen, wobei die Steuerwelle 24a in antriebstechnischem Eingriff mit dem Funktionselement 25 steht oder bringbar ist. Denkbar ist auch, dass die Steuerwelle 24a selbst ein Bestandteil des Funktionselements 25 ist.

Vorzugsweise ist es so, dass sich das Funktionselement 25 an einem Steuerabschnitt 26 der Steuerwelle 24a abstützt. Je nach Stellung der Steuerwelle 24a verstellt sich das Funktionselement 25 im Wesentlichen senkrecht zu der Stellelementachse 24b, wie in Fig. 1 durch den Bewegungspfeil 27 und durch die gestrichelte Darstellung des Funktionselements 28 dargestellt ist.

Die Steuerwelle 24 lässt sich mittels des Antriebs 8 nun in mindestens zwei Steuerstellungen, vorzugsweise in mindestens drei Steuerstellungen, hier und vorzugsweise in insgesamt fünf Steuerstellungen, bringen, um die obigen Funktionszustände des Kraftfahrzeugschlosses 3 einstellen zu können.

Besonders einfach gestaltet sich der Aufbau des Kraftfahrzeugschlosses 3 bei dem dargestellten und insoweit bevorzugten Ausführungsbeispiel dadurch, dass das Funktionselement 25 als Draht ausgestaltet ist und in unterschiedliche Funktionsstellungen entlang des Bewegungspfeils 27 auslenkbar ist. Grundsätzlich ist es auch denkbar, dass das Funktionselement 25 als Streifen ausgestaltet ist. Dabei kann das Funktionselement 25 starr ausgestaltet sein und ggfs. über eine Schwenklagerung auslenkbar sein. Denkbar ist beispielsweise die Ausgestaltung des Funktionselements 25 nach Art einer Wippe oder dgl..

Hier und vorzugsweise ist es allerdings so, dass das Funktionselement 25 als federelastischer Draht oder Streifen ausgestaltet ist und so als Biege-Funktionselement 25 in die unterschiedlichen Funktionsstellungen bringbar ist.

Im Folgenden wird die Funktionsweise des Kraftfahrzeugschlosses 3 in den Funktionszuständen "Entriegelt" und "Entriegelt-Kindergesichert" erläutert. Im Übrigen darf zur Erläuterung der grundsätzlichen Funktionsweise des Kraftfahrzeugschlosses mit federelastischem Funktionselement 25 auf die internationale Patentanmeldung WO 2009/0400764 A1 verwiesen werden, die auf die Anmelderin zurückgeht und deren Inhalt zum Gegenstand der vorliegenden Anmeldung gemacht wird.

Im Funktionszustand "Entriegelt" steht das Funktionselement 25 in seiner in Fig. 1 unteren, in durchgezogener Linie dargestellten Stellung. Damit befindet sich das Funktionselement 25 im Bewegungsbereich eines Innenbetätigungshebels 29, der mit einem Türinnengriff gekoppelt ist, sowie im Bewegungsbereich eines Außenbetätigungshebels 30, der mit einem Türaußengriff gekoppelt ist. Eine Verstellung des Innenbetätigungshebels 29 oder des Außenbetätigungshebels 30 in Richtung des Bewegungspfeils 31 führt dazu, dass das Funktionselement 25 senkrecht zu seiner Erstreckung der Bewegung des jeweiligen Hebels 29, 30 folgt, auf die in Fig. 1 nur angedeutete Sperrklinke 32 trifft und diese wiederum in Richtung des Bewegungspfeils 31 mitnimmt und aushebt.

Eine Verstellung der Steuerwelle 24 in Richtung des Bewegungspfeils 33 um 90° aus der in Fig. 1 dargestellten Stellung heraus führt zur Einstellung des Funktionszustands "Enfiriegelt-Kindergesichert". In diesem Zustand befindet sich das Funktionselement 25 in der in Fig. 1 in gestrichelter Linie dargestellten Stellung. Eine Verstellung des Innenbetätigungshebels 29 in Richtung des Bewegungspfeils 31 hat damit keine Auswirkung auf das Funktionselement 25 und die Sperrklinke 32. Das Funktionselement 25 befindet sich allerdings unverändert im Bewegungsbereich des Außenbetätigungshebels 30, so dass ein Ausheben der Sperrklinke 32 und damit ein Öffnen der Kraftfahrzeugtür über den Außenbetätigungshebel 30 und damit über den Türaußengriff möglich ist.

Analog zu der Einstellung der oben beschriebenen Funktionszustände "Entriegelt" und "Entriegelt-Kindergesichert" lassen sich auch alle anderen oben angesprochenen Funktionszustände allein durch eine entsprechende Verstellung der Steuerwelle 24 umsetzen.

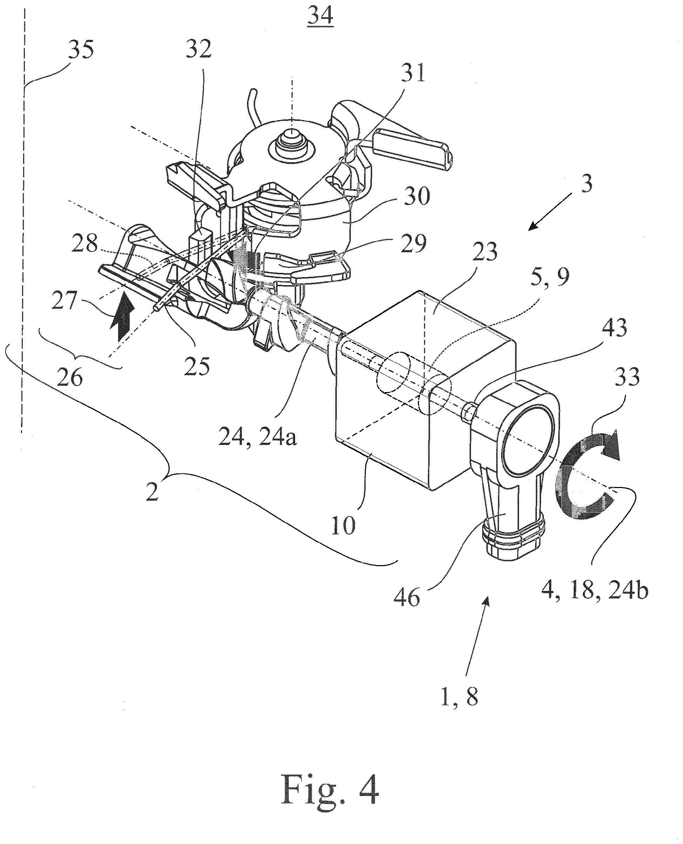

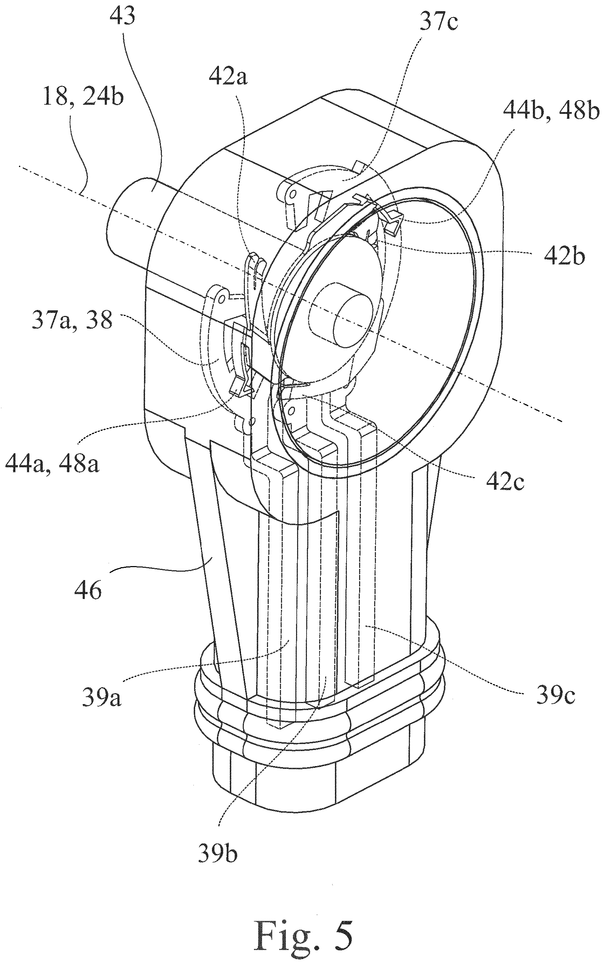

In den Fig. 4 bis 7 ist ein weiteres Ausführungsbeispiel eines vorschlagsgemäßen Kraftfahrzeugschlosses mit einem weiteren Ausführungsbeispiel einer vorschlagsgemäßen Antriebskomponente dargestellt. Dabei entspricht die jeweilige Bedeutung der Bezugszeichen derjenigen des ersten Ausfuhrungsbeispiels der Fig. 1 bis 3 wobei jeweils auf die diesbezüglichen Beschreibungen oben zur Funktionsweise der betreffenden Elemente verwiesen wird.

Wie in diesem Ausführungsbeispiel der Antriebskomponente ist vorschlagsgemäß vorgesehen, dass die Sensoranordnung 7 eine variabel verschaltbare Schaltpolanordnung 36 mit mehreren Schaltpolen 37a-c aufweist und die Ist-Stellung des Antriebsteils 5 basierend auf einem Verschaltungszustand der Schaltpolanordnung 36 bestimmt wird. Unter einem solchen Verschaltungszustand ist die Konfiguration zu verstehen, gemäß welcher eine elektrische Verbindung, ggf. mit einem Widerstand oder einer Impedanz, mit mindestens einem der Schaltpole 37a-c der Schaltpolanordnung 36 besteht oder auch nicht. Ein solcher Verschaltungszustand kann schon dadurch gegeben sein, dass jeweils einer der Schaltpole 37a-c mit der Auswerteeinheit 13 elektrisch verbunden ist. Der Verschaltungszustand kann beispielsweise durch die obige Auswerteeinheit 13 mittels der Signalleitungen 14a-c bestimmt werden. Ein solcher Verschaltungszustand kann aber auch einer Verschaltung der Schaltpole 37a-c untereinander entsprechen, wie nachstehend beschrieben wird. Bevorzugt ist die Schaltpolanordnung 36 gegenüber dem Antriebsteil 5 ortsfest angeordnet.

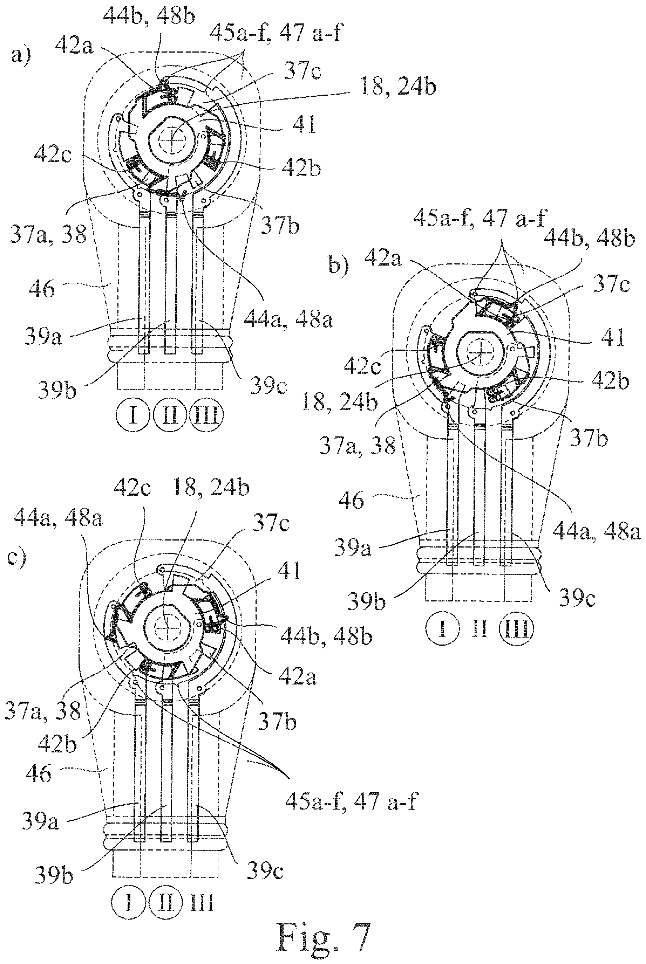

In den Fig. 7a-c ist jeweils eine unterschiedliche Ist-Stellung des Antriebsteils 5 mit einem jeweiligen und untereinander unterschiedlichem solchen Verschaltungszustand dargestellt. So sind in dem Verschaltungszustand der Fig. 7a alle Schaltpole 37a-c miteinander elektrisch verbunden. In dem Verschaltungszustand der Fig. 7b ist der erste Schaltpol 37a mit dem dritten Schaltpol 37c verbunden, wohingegen der zweite Schaltpol 37b mit keinem der beiden anderen Schaltpole 37a, c elektrisch verbunden ist. In dem Verschaltungszustand der Fig. 7c wiederum ist der erste Schaltpol 37a mit dem zweiten Schaltpol 37b verbunden und der dritte Schaltpol 37c ist mit keinem der beiden andere Schaltpole 37a, b elektrisch verbunden.

Hier ist weiter bevorzugt, dass in jeder Antriebsstellung - wobei die Ist-Stellungen der Fig. 7a-c dementsprechend bevorzugt diese Antriebsstellungen darstellen - ein Basis-Schaltpol 38 - welcher hier beispielhaft der erste Schaltpol 37a ist - der Schaltpolanordnung 36 mit mindestens einem anderen Schaltpol 37b, c verschaltet ist. Auf diese Weise kann es gemäß einer Variante ausreichen, den Verschaltungszustand jeweils zu dem Basis-Schaltpol 38 zu bestimmen, was die Erfassung vereinfacht. So muss nicht geprüft werden, ob nur der zweite Schaltpol 37b mit dem dritten Schaltpol 37c verschaltet und damit elektrisch verbunden ist. Um aber eine zusätzliche Information zu übertragen, insbesondere einen Bitwert mit zwei möglichen Zuständen, kann es vorgesehen sein, auch z. B. einen Widerstandswert zwischen den beiden anderen Schaltpolen 37b, c zu untersuchen. Auf diese Weise wird also mindestens ein zusätzliches Bit als Informationsquelle vorgesehen.

Stanzbiegeleiter stellen eine besonders geeignete Möglichkeit dar, eine solche Schaltpolanordnung 36 herzustellen. Daher ist es bevorzugt, dass die Schaltpolanordnung 36 mehrere Stanzbiegeleiter 39a-c aufweist, wobei die Stanzbiegeleiter 39a-c jeweils einem Schaltpol 37a-c der Schaltpolanordnung 36 entsprechen. Diese Stanzbiegeleiter 39a-c können dann wiederum die Signalleitungen 14a-c bilden oder elektrisch mit solchen verbunden sein.

Der jeweilige unterschiedliche Verschaltungszustand wird bevorzugt durch eine entsprechend unterschiedliche Stellung einer Verschaltungsvorrichtung 40 bewirkt. Diesbezüglich ist bevorzugt, dass die Halteanordnung 6 eine Verschaltungsvorrichtung 40 aufweist, welche abhängig von einer Ist-Stellung des Antriebsteils 5 die Schaltpolanordnung 36 verschaltet, Hier und vorzugsweise ist die Verschaltungsvorrichtung 40 ein Bestandteil des Antriebsteils 5, sodass eine Ist-Stellung des Antriebsteils 5 sich unmittelbar in einer entsprechende Stellung der Verschaltungsvorrichtung 40 abbildet. Ebenso ist es bevorzugt, dass die Verschaltungsvorrichtung 40 ein Bestandteil der Sensoranordnung 7 ist.

Es ist nicht erforderlich, dass eine Verschaltung der Schaltpolanordnung 36 durch die Verschaltungsvorrichtung 40 für alle Stellungen der Verschaltungsvorrichtung 40 bzw. des Antriebsteils 5 oder auch nur für alle Stabilisierungsstellungen des Antriebsteils 5 stattfindet. Bevorzugt ist jedoch, dass die Verschaltungsvorrichtung 40 in mindestens zwei Stabilisierungsstellungen - welche mindestens zwei Stabilisierungsstellungen hier als "Schaltstellungen" definiert werden - die Schaltpolanordnung 36 jeweils unterschiedlich verschaltet. Es gibt also mindestens zwei Stabilisierungsstellungen, in denen jeweils eine unterschiedliche Verschaltung der Schaltpolanordnung 36 durch die Verschaltungsvorrichtung 40 erfolgt. Wie für das zweite Ausführungsbeispiel dargestellt ist und oben bereits beschrieben wurde, ist es weiter bevorzugt, dass in den Schaltstellungen jeweils mindestens zwei Schaltpole 37a-c miteinander verschaltet werden. Die Verschaltungsvorrichtung 40 kann dann rein zum Verbinden der Schaltpole 37a-c dienen, sodass keine eigene, separate Leitung von der Auswerteeinheit 13 zu der drehbaren Verschaltungsvorrichtung 40 erforderlich ist.

Hinsichtlich der Verschaltungsvorrichtung 40 ist ferner bevorzugt, dass die Verschaltungsvorrichtung 40 eine Basisstruktur 41 und Kontakte 42a-c zum Verschalten der Schaltpolanordnung 36 aufweist. Bei dieser Basisstruktur 41 handelt es sich im zweiten Ausführungsbeispiel der Fig. 4-7 um ein ringartiges Blech. Die Kontakte 42a-c sind hier und bevorzugt als Federkontakte ausgeführt und sind jeweils beabstandet an der Basisstruktur 41 angeordnet. Da über diese Kontakte 42a-c regelmäßig keine Kraftübertragung erforderlich ist, sieht eine bevorzugte Ausgestaltung vor, dass die Kontakte 42a-c in Richtung der Antriebsteilachse 4 ausgerichtet sind. Ebenso ist es bevorzugt, dass beim Verschalten der Schaltpolanordnung 36 der Erfassungskreis durch mindestens einen Kontakt 42a-c und vorzugsweise auch durch die Basisstruktur 41 führt.

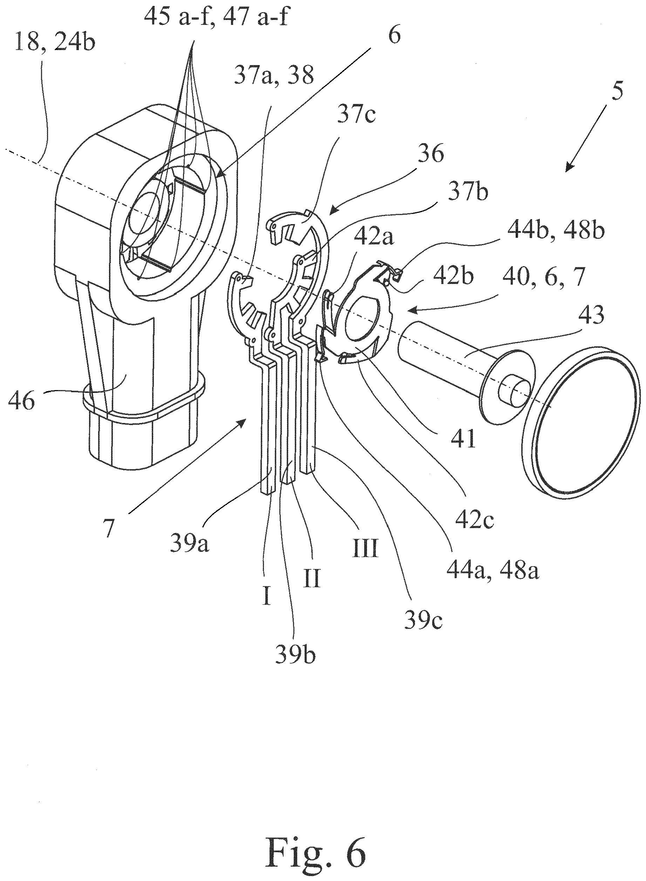

Wie bereits oben beschrieben ist die Verschaltungsvorrichtung 40 bevorzugt ein Bestandteil des Antriebsteils 5. Für einen einfachen Zusammenbau des Antriebsteils 5 - einschließlich der Verschaltungsvorrichtung 40 - ist bevorzugt vorgesehen, dass die Verschaltungsvorrichtung 40 und insbesondere die Basisstruktur 41 hinsichtlich einer Drehbewegung formschlüssig an einer Befestigungsstruktur 43 des Antriebsteils 5 angeordnet ist. Im Ausführungsbeispiel der Fig. 4 bis 7 weist die Basisstruktur 41 - wie aus der Fig. 6 zu erkennen ist - eine Flachseite an ihrer Öffnung auf, welche einer entsprechenden Fläche der zapfenartigen Befestigungsstruktur 43 des Antriebsteils 5 entspricht. Somit kann die Verschachtelungsvorrichtung 40 einfach auf die Befestigungsstruktur 43 aufgeschoben werden. Die Befestigungsstruktur 43 ist drehfest mit der Steuerwelle 24a verbunden.

Zum Stabilisieren des Antriebsteils 5 ist bevorzugt vorgesehen, dass die Verschaltungsvorrichtung 40 mindestens ein Halteelement 44a, b zum Stabilisieren des Antriebsteils 5 in den Schaltstellungen aufweist. Dabei sind vorzugsweise mindestens zwei solcher Halteelemente 44a, b vorgesehen.

Speziell kann dieses Stabilisieren dadurch erfolgen, dass das mindestens eine Halteelement 44a, b zum stabilisierenden Eingriff in mindestens ein Gegenelement 45a-f eingerichtet ist. Dieser stabilisierende Eingriff erfolgt bevorzugt und, wie in den Fig. 4 bis 7 für das zweite Ausführungsbeispiel dargestellt, radial zur Antriebsteilachse 4. Entsprechend ist es bevorzugt, dass eine Eingriffsrichtung des mindestens einen Halteelements 44a, b senkrecht zur Ausrichtung der Kontakte 42a-c ist.

Für dieses mindestens eine Gegenelement 45a-f, welches vorzugsweise von der Halteanordnung 6 umfasst ist, kann vorteilhafterweise gelten, dass es an dem Antriebsgehäuse 23 und/oder an einem Sensorgehäuse 46 der Sensoranordnung 7 angeordnet sein kann. Dieses Sensorgehäuse 46 kann dabei auch ein Bestandteil des Antriebsgehäuses 23 sein. Die für die Gegenelemente 45a-f in dem Ausführungsbeispiel der Fig. 4 bis 7 dargestellte und insoweit bevorzugte Variante sieht vor, dass das mindestens eine Gegenelement 45a-f jeweils eine Kerbe 46a-f in dem Antriebsgehäuse 23 und/oder an dem Sensorgehäuse 46 aufweist. Ebenso kann das mindestens eine Gegenelement 45a-f bzw. die entsprechenden Kerben 46a-f durch einen eingelegten Federkranz gebildet werden.

Wie aus der Fig. 7 hervorgeht und ebenfalls bevorzugt ist, greift das mindestens eine Halteelement 45a, b in den Schaltstellungen in jeweils unterschiedliche Gegenelemente 45a-f ein. Speziell greifen in den Schaltstellungen mindestens zwei Halteelemente 44a, b in jeweils unterschiedliche Gegenelemente 45a-f ein.

In der in der Fig. 7a dargestellten ersten Schaltstellung greift das Halteelement 44a in das Gegenelement 45a und das Halteelement 44b in das Gegenelement 45d ein. In der in der Fig. 7b dargestellten zweiten Schaltstellung greift das Halteelement 44a in das Gegenelement 45b und das Halteelement 44b in das Gegenelement 45e ein. Schließlich greift in der in der Fig. 7c dargestellten dritten Schaltstellung das Halteelement 44a in das Gegenelement 45c und das Halteelement 44b in das Gegenelement 45f ein. Die jeweils resultierende Verschaltung der Schaltpolanordnung 36 wurde bereits beschrieben.

Da die Halteelemente 44a, b jeweils um 180° versetzt angeordnet sind, wäre eine Stabilisierungsstellung auch durch eine jeweilige Drehung der Verschaltungsvorrichtung 40 um 180° gegeben. Allerdings wäre die Verschaltung der Schaltpolanordnung 36 durch die Verschaltungsanordnung 40 für alle diese weiteren Stabilisierungsstellungen gleich, da in keiner dieser weiteren Stabilisierungsstellungen ein elektrischer Kontakt zwischen der Verschaltungsvorrichtung 40 und der Schaltpolanordnung 36 vorhanden ist. Daher sind diese weiteren Stabilisierungsstellungen auch nicht als Antriebsstellungen vorgesehen und werden durch den Antrieb 8 nicht angefahren.

Bevorzugt ist es, dass das mindestens eine Halteelement 44a, b jeweils einen insbesondere federnden Rastvorsprung 48a, b aufweist, weiter insbesondere, dass der jeweilige Rastvorsprung 48a, b an der Basisstruktur 41 angeordnet ist.

Schließlich ist es gemäß einem bevorzugten Ausführungsbeispiel vorgesehen, dass zumindest ein Teil der Halteanordnung 6 und/oder der Sensoranordnung 7 ein Bestandteil des Antriebsteils 5. Entsprechende Beispiele wurden obenstehend bereits beschrieben.

## Patentansprüche

1. Antriebskomponente eines Antriebsstranges (2) eines Kraftfahrzeugschlosses (3) mit einem zum eine Antriebsteilachse (4) rotierbaren Antriebsteil (5), mit einer Sensoranordnung (7) zum Bestimmen einer Ist-Stellung des Antriebsteils (5) durch Erfassen des Antriebsteil (5), wobei die Sensoranordnung (7) eine variabel verschaltbare Schaltpolanordnung (36) mit mehreren Schaltpole (37a-c) aufweist und die Ist-Stellung des Antriebsteils (5) basierend auf einem Verschaltungszustand der Schaltpolanordnung (36) bestimmt wird, **dadurch gekennzeichnet dass**, die Antriebskomponente eine Halteanordnung (6) zum Stabilisieren des Antriebsteils (5) in mindestens einer Stabilisierungsstellung aufweist.

2. Antriebskomponente nach Anspruch 1, **dadurch gekennzeichnet, dass** zumindest ein Teil der Halteanordnung (6) ein Bestandteil der Sensoranordnung (7) ist.

3. Antriebskomponente nach Anspruch 1 oder 2, **dadurch gekennzeichnet, dass** die Antriebskomponente (1) ein elektrischer Antrieb (8) ist, einen Rotor (9) und einen Ständer (10) aufweist und dass das Antriebsteil (5) der Rotor (9) des elektrischen Antriebs (8) ist, vorzugsweise, dass der Ständer (10) eine Spulenanordnung aus mindestens einer Antriebsspule und der Rotor (9) eine Rotor-Permanentmagnetanordnung aufweisen, wobei die Spulenanordnung mit der Rotor-Permanentmagnetanordnung zur Erzeugung von Antriebsmomenten zusammenwirkt, insbesondere, dass die Halteanordnung (6) antriebsseitig zum Ständer (10) angeordnet ist.

4. Antriebskomponente nach Anspruch 3, **dadurch gekennzeichnet, dass** durch unterschiedliche Ansteuerung des Antriebs (8), vorzugsweise durch unterschiedliche stationäre Bestromung der Spulenanordnung, mindestens zwei magnetisch stabile, rotatorische Antriebsstellungen des Rotors (9) anfahrbar sind, weiter vorzugsweise, dass die mindestens eine Stabilisierungsstellung einer Antriebsstellung entspricht.

5. Antriebskomponente nach einem der vorhergehenden Ansprüche, **dadurch gekennzeichnet, dass** die Halteanordnung (6) zu jeder Stabilisierungsstellung eine Haltefläche (11a-d) aufweist, welche in der jeweiligen Stabilisierungsstellung mit dem Antriebsteil (5) in Kontakt ist, vorzugsweise, dass der Erfassungskreis durch die Haltefläche (11a-d) führt.

6. Antriebskomponente nach einem der vorhergehenden Ansprüche, **dadurch gekennzeichnet, dass** ein der Ist-Stellung zugeordneter Kontaktpol (12) der Sensoranordnung (7) durch eine jeweilige Haltefläche (11a-d) gebildet wird, vorzugsweise, dass das Antriebsteil (5) in einer jeweiligen Stabilisierungsstellung in elektrischer Verbindung mit der jeweiligen Haltefläche (11a-d) steht, sodass dann die Sensoranordnung (7) die der Haltefläche (11a-d) zugeordnete Stabilisierungsstellung als Ist-Stellung erfasst.

7. Antriebskomponente nach einem der vorhergehenden Ansprüche, **dadurch gekennzeichnet, dass** das Antriebsteil (5) einen radial zur Antriebsteilachse (4) ausgerichteten Kontaktarm (15) aufweist, vorzugsweise, dass die Halteanordnung (6) zum Stabilisieren des Antriebsteils (5) auf den Kontaktarm (15), vorzugsweise auf einen radialen Außenbereich des Kontaktarms (15), wirkt und/oder dass der Erfassungskreis durch den Kontaktarm (15) führt, insbesondere, dass eine Polfläche (16) an dem radialen Außenbereich des Kontaktarms (15) angeordnet ist und der Erfassungskreis durch die Polfläche (16) führt.

8. Antriebskomponente nach einem der vorhergehenden Ansprüche, **dadurch gekennzeichnet, dass** die Halteanordnung (6) einen ringartigen Schleifkontakt (17) um eine Ringachse (18) umfasst, vorzugsweise, wobei die Ringachse (18) im Wesentlichen parallel zu der Antriebsteilsachse (4) verläuft.

9. Antriebskomponente nach einem der Ansprüche 1 bis 8, **dadurch gekennzeichnet, dass** die Halteanordnung (6) zu jeder Stabilisierungsstellung eine Rastvorrichtung (19a-d) aufweist, sodass das Antriebsteil (5) in jeder Stabilisierungsstellung mechanisch einrastet.

10. Antriebskomponente nach Anspruch 9, **dadurch gekennzeichnet, dass** die Rastvorrichtungen (19a-d) jeweils Seitenerhebungen (20) aufweisen, welche die jeweilige Stabilisierungsstellung, insbesondere in Umlaufrichtung (21) des Schleifkontakt (17), begrenzen, vorzugsweise, sodass die Seitenerhebungen (20) jeweils eine Rückstellkraft gegen ein Auslenken aus der Stabilisierungsstellung auf das Antriebsteil (5), weiter insbesondere, auf den Kontaktarm (15) ausüben.

11. Antriebskomponente nach Anspruch 10, **dadurch gekennzeichnet, dass** die Seitenerhebungen (20) jeweils unterschiedliche Flankensteilheiten aufweisen, vorzugsweise, wobei die Flankensteilheit einer jeweiligen Außenflanke (21a) der Seitenerhebungen (20) geringer ist als die Flankensteilheit einer jeweiligen Innenflanke (21b) der Seitenerhebungen (20).

12. Antriebskomponente nach Anspruch 10 oder 11, **dadurch gekennzeichnet, dass** die Halteanordnung (6), vorzugsweise der Schleifkontakt (17), zwischen benachbarten Rastvorrichtungen (19a-d) einen jeweiligen Freilaufbereich (22a-d) aufweist, in welchem das Antriebsteil (5) sich kontaktfrei rotierend bewegen kann, insbesondere, dass das Antriebsteil (5) sich von der Sensoranordnung (7) unerfasst durch den jeweiligen Freilaufbereich (22a-d) bewegt.

13. Antriebskomponente nach einem der vorhergehenden Ansprüche, **dadurch gekennzeichnet, dass** in jeder Antriebsstellung ein Basis-Schaltpol (38) der Schaltpolanordnung (36) mit mindestens einem anderen Schaltpol (37b-c) verschaltet ist.

14. Antriebskomponente nach Anspruch 13, **dadurch gekennzeichnet, dass** die Halteanordnung (6) eine Verschaltungsvorrichtung (40) aufweist, welche abhängig von einer Ist-Stellung des Antriebsteil (5) die Schaltpolanordnung (36) verschaltet, vorzugsweise, welche Verschaltungsvorrichtung (40) ein Bestandteil des Antriebsteils (5) ist.

15. Kraftfahrzeugschloss mit einem Stellelement (24), insbesondere einer Steuerwelle (24a), und einer Antriebskomponente (1) eines Antriebsstranges (2) zur Verstellung des Stellelements (24) nach Anspruch 1 und ggf. nach einem der Ansprüche 2 bis 14.

## Claims

1. Drive component of a drive train (2) of a motor vehicle lock (3) having a drive part (5) which can rotate about a drive part axis (4), having a sensor arrangement (7) for determining an actual position of the drive part (5) by detecting the drive part (5), wherein the sensor arrangement (7) has a variably interconnectable switching pole arrangement (36) with a plurality of switching poles (37a-c) and the actual position of the drive part (5) is determined based on an interconnection state of the switching pole arrangement (36), **characterized in that** the drive component has a holding arrangement (6) for stabilizing the drive part (5) in at least one stabilization position.

2. Drive component according to Claim 1, **characterized in that** at least one part of the holding arrangement (6) is a constituent part of the sensor arrangement (7).

3. Drive component according to Claim 1 or 2, **characterized in that** the drive component (1) is an electric drive (8), has a rotor (9) and a stator (10), and **in that** the drive part (5) is the rotor (9) of the electric drive (8), preferably **in that** the stator (10) has a coil arrangement comprising at least one drive coil and the rotor (9) has a rotor permanent-magnet arrangement, wherein the coil arrangement interacts with the rotor permanent-magnet arrangement for generating drive torques, in particular **in that** the holding arrangement (6) is arranged on the drive side in relation to the stator (10).

4. Drive component according to Claim 3, **characterized in that** at least two magnetically stable, rotary drive positions of the rotor (9) can be moved to by way of different actuation of the drive (8), preferably by way of different steady-state energization the coil arrangement, further preferably in that the at least one stabilization position corresponds to a drive position.

5. Drive component according to one of the preceding claims, **characterized in that** the holding arrangement (6) has a holding face (11a-d) for each stabilization position, which holding face is in contact with the drive part (5) in the respective stabilization position, preferably **in that** the detection circuit passes through the holding plate (11a-d).

6. Drive component according to one of the preceding claims, **characterized in that** a contact pole (12) of the sensor arrangement (7), which contact pole is associated with the actual position, is formed by a respective holding face (11a-d), preferably **in that** the drive part (5) is electrically connected to the respective holding face (11a-d) in a respective stabilization position, so that the sensor arrangement (7) then detects the stabilization position which is associated with the holding face (11a-d) as the actual position.

7. Drive component according to one of the preceding claims, **characterized in that** the drive part (5) has a contact arm (15) which is oriented radially in relation to the drive part axis (4), preferably **in that** the holding arrangement (6) acts on the contact arm (15), preferably on a radially outer region of the contact arm (15), in order to stabilize the drive part (5), and/or **in that** the detection circuit passes through the contact arm (15), in particular **in that** a pole face (16) is arranged on the radially outer region of the contact arm (15) and the detection circuit passes through the pole face (16).

8. Drive component according to one of the preceding claims, **characterized in that** the holding arrangement (6) comprises an annular sliding contact (17) around a ring axis (18), preferably wherein the ring axis (18) runs substantially parallel to the drive part axis (4).

9. Drive component according to one of Claims 1 to 8, **characterized in that** the holding arrangement (6) has a latching apparatus (19a-d) for each stabilization position, so that the drive part (5) mechanically latches in in each stabilization position.

10. Drive component according to Claim 9, **characterized in that** the latching apparatuses (19a-d) each have side protrusions (20) which limit the respective stabilization position, in particular in the rotation direction (21) of the sliding contact (17), preferably so that the side protrusions (20) each exert a restoring force against a deflection out of the stabilization position onto the drive part (5), further in particular onto the contact arm (15).

11. Drive component according to Claim 10, **characterized in that** the side protrusions (20) each have different edge gradients, preferably wherein the edge gradient of a respective outer edge (21a) of the side protrusions (20) is lower than the edge gradient of a respective inner edge (21b) of the side protrusions (20).

12. Drive component according to Claim 10 or 11, **characterized in that** the holding arrangement (6), preferably the sliding contact (17), has a respective free-running region (22a-d) between adjacent latching apparatuses (19a-d), in which free-running region the drive part (5) can move in a rotating manner without contact, in particular **in that** the drive part (5) moves from the sensor arrangement (7) through the respective free-running region (22a-d) in an undetected manner.

13. Drive component according to one of the preceding claims, **characterized in that** a base switching pole (38) of the switching pole arrangement (36) is interconnected to at least one other switching pole (37b-c) in each drive position.

14. Drive component according to Claim 13, **characterized in that** the holding arrangement (6) has an interconnection apparatus (40) which interconnects the switching pole arrangement (36) depending on an actual position of the drive part (5), preferably which interconnection apparatus (40) is a constituent part of the drive part (5).

15. Motor vehicle lock comprising an actuating element in particular a control shaft (24a), and a drive component (1) of a drive train (2) for adjusting the actuating element (24) according to Claim 1 and possibly according to one of Claims 2 to 14.

## Revendications

1. Composant d'entraînement d'une chaîne cinématique (2) d'une serrure de véhicule automobile (3) comprenant une partie d'entraînement (5) pouvant tourner autour d'un axe de la partie d'entraînement (4), avec un agencement de capteur (7) pour déterminer une position réelle de la partie d'entraînement (5) par la détection de la partie d'entraînement (5), l'agencement de capteur (7) présentant un agencement de pôles de commutation (36) pouvant être raccordé de manière variable avec plusieurs pôles de commutation (37a-c) et la position réelle de la partie d'entraînement (5) étant déterminée sur la base d'un état de raccordement de l'agencement de pôles de commutation (36), **caractérisé en ce que** le composant d'entraînement présente un agencement de retenue (6) pour stabiliser la partie d'entraînement (5) dans au moins une position de stabilisation.

2. Composant d'entraînement selon la revendication 1, **caractérisé en ce qu'**au moins une partie de l'agencement de retenue (6) est un constituant de l'agencement de capteur (7).

3. Composant d'entraînement selon la revendication 1 ou 2, **caractérisé en ce que** le composant d'entraînement (1) est un entraînement électrique (8), présente un rotor (9) et un stator (10), et **en ce que** la partie d'entraînement (5) est le rotor (9) de l'entraînement électrique (8), de préférence **en ce que** le stator (10) présente un agencement de bobine constitué d'au moins une bobine d'entraînement et le rotor (9) présente un agencement d'aimant permanent de rotor, l'agencement de bobine coopérant avec l'agencement d'aimant permanent de rotor pour générer des couples d'entraînement, en particulier **en ce que** l'agencement de retenue (6) est disposé du côté de l'entraînement du stator (10).

4. Composant d'entraînement selon la revendication 3, **caractérisé en ce que** par une commande différente de l'entraînement (8), de préférence par une différente alimentation en courant stationnaire de l'agencement de bobine, au moins deux positions d'entraînement en rotation du rotor (9), stables du point de vue magnétique, peuvent être commandées, et de préférence en outre **en ce que** l'au moins une position de stabilisation correspond à une position d'entraînement.

5. Composant d'entraînement selon l'une quelconque des revendications précédentes, **caractérisé en ce que** l'agencement de retenue (6) présente, pour chaque position de stabilisation, une surface de retenue (11a-d) qui est en contact avec la partie d'entraînement (5) dans la position de stabilisation respective, de préférence **en ce que** le circuit de détection passe par la surface de retenue (11a-d).

6. Composant d'entraînement selon l'une quelconque des revendications précédentes, **caractérisé en ce qu'**un pôle de contact (12) de l'agencement de capteur (7), associé à la position réelle, est formé par une surface de retenue respective (11ad), de préférence **en ce que** la partie d'entraînement (5), dans une position de stabilisation respective, est en liaison électrique avec la surface de retenue respective (11a-d), de telle sorte que l'agencement de capteur (7) détecte la position de stabilisation associée à la surface de retenue (11a-d) en tant que position réelle.

7. Composant d'entraînement selon l'une quelconque des revendications précédentes, **caractérisé en ce que** la partie d'entraînement (5) présente un bras de contact (15) orienté radialement par rapport à l'axe de la partie d'entraînement (4), de préférence **en ce que** l'agencement de retenue (6) pour la stabilisation de la partie d'entraînement (5) agit sur le bras de contact (15), de préférence sur une région extérieure radiale du bras de contact (15), et/ou **en ce que** le circuit de détection passe par le bras de contact (15), en particulier **en ce qu'**une surface polaire (16) est disposée au niveau de la région extérieure radiale du bras de contact (15) et le circuit de détection passe par la surface polaire (16).

8. Composant d'entraînement selon l'une quelconque des revendications précédentes, **caractérisé en ce que** l'agencement de retenue (6) comprend un contact glissant de type bague (17) autour d'un axe de bague (18), l'axe de bague (18) s'étend de préférence essentiellement parallèlement à l'axe de la partie d'entraînement (4).

9. Composant d'entraînement selon l'une quelconque des revendications 1 à 8, **caractérisé en ce que** l'agencement de retenue (6) présente, pour chaque position de stabilisation, un dispositif d'encliquetage (19a-d), de sorte que la partie d'entraînement (5) s'encliquète mécaniquement dans chaque position de stabilisation.

10. Composant d'entraînement selon la revendication 9, **caractérisé en ce que** les dispositifs d'encliquetage (19a-d) présentent à chaque fois des rehaussements latéraux (20) qui délimitent la position de stabilisation respective, en particulier dans la direction périphérique (21) du contact glissant (17), de préférence de telle sorte que les rehaussements latéraux (20) exercent à chaque fois une force de rappel à l'encontre d'une déviation hors de la position de stabilisation sur la partie d'entraînement (5), et notamment en outre sur le bras de contact (15).

11. Composant d'entraînement selon la revendication 10, **caractérisé en ce que** les rehaussements latéraux (20) présentent à chaque fois des pentes de flancs différentes, de préférence la pente de flanc d'un flanc extérieur respectif (21a) des rehaussements latéraux (20) étant moins importante que la pente de flanc d'un flanc intérieur respectif (21b) des rehaussements latéraux (20).

12. Composant d'entraînement selon la revendication 10 ou 11, **caractérisé en ce que** l'agencement de retenue (6), de préférence le contact glissant (17), présente, entre des dispositifs d'encliquetage adjacents (19a-d), une région de roue libre respective (22a-d) dans laquelle la partie d'entraînement (5) peut se déplacer en rotation sans contact, en particulier **en ce que** la partie d'entraînement (5) se déplace sans être détectée par l'agencement de capteur (7) à travers la région de roue libre respective (22a-

13. Composant d'entraînement selon l'une quelconque des revendications précédentes, **caractérisé en ce que** dans chaque position d'entraînement, un pôle de commutation de base (38) de l'agencement de pôles de commutation (36) est raccordé avec au moins un autre pôle de commutation (37b-c).

14. Composant d'entraînement selon la revendication 13, **caractérisé en ce que** l'agencement de retenue (6) présente un dispositif de raccordement (40) qui en fonction d'une position réelle de la partie d'entraînement (5), raccorde l'agencement de pôles de commutation (36), de préférence lequel dispositif de raccordement (40) étant un constituant de la partie d'entraînement (5).

15. Serrure de véhicule automobile comprenant un élément de commande (24), en particulier un arbre de commande (24a), et un composant d'entraînement (1) d'une chaîne cinématique (2) pour le réglage de l'élément de commande (24) selon la revendication 1 et éventuellement selon l'une quelconque des revendications 2 à 14.
